# EUROPÄISCHE PATENTANMELDUNG

(11) **EP 4 660 490 A1**
(43) Veröffentlichungstag der Anmeldung: **10.12.2025**
(21) Anmeldenummer: 25177435.2
(22) Anmeldetag: 19.05.2025
(51) Int. Cl.: F16K 7/12, F16K 27/02

(54) **VENTILKÖRPER FÜR MEMBRANVENTIL UND MEMBRANVENTIL**

(30) Priorität: 03.06.2024 DE 102024115315
(71) Anmelder: GEMÜ Gebr. Müller Apparatebau GmbH & Co. Kommanditgesellschaft, 74653 Ingelfingen (DE)
(72) Erfinder: Frankenbach, Klaus, 74670 Forchtenberg (DE); Renner, Maximilian, 74706 Osterburken (DE); Tschernowsky, Tobias, 74653 Ingelfingen (DE)
(74) Vertreter: DREISS Patentanwälte PartG mbB

(57) **Zusammenfassung**

Es wird ein Ventilkörper (2) für ein Membranventil beschrieben. Der Ventilkörper (2) umfasst wenigstens einen Prozessfluid-Kanal (100a-b), welcher sich entlang einer gedachten ersten Mittenlängsachse (M1) erstreckt und wenigstens einen Ventilsitz (200), welcher über eine mittels einer Ventilmembran (6) verschließbaren Öffnung (300) des Ventilkörpers (2) zugänglich ist. Wenigstens eine Ventilkammer (400a-b) ist vorgesehen, welche den wenigstens einen Prozessfluid-Kanal (100a-b) mit dem Ventilsitz (200) fluidführend verbindet, und welche sich entlang einer gedachten zweiten Mittenlängsachse (M2) erstreckt. Wenigstens eine zwischen der Öffnung (300) und dem Prozessfluid-Kanal (100a-b) angeordnete Ausnehmung (500a-b) ist vorgesehen, welche sich entlang einer gedachten dritten Mittenlängsachse (M3) erstreckt, wobei ein erster stumpfer Winkel (α, β), der von der dritten Mittenlängsachse (M3) und der ersten und/oder zweiten Mittenlängsachse (M1, M2) eingeschlossen wird, größer ist als ein zweiter stumpfer Winkel (γ), der von der ersten und der zweiten Mittenlängsachse (M1, M2) eingeschlossen wird.

## Beschreibung

Die Erfindung betrifft Ventilkörper für ein Membranventil und ein Membranventil.

Membranventile sind allgemein bekannt. Es werden Fortschritte bei der Strömungsoptimierung des fluidführenden Bereichs des Ventilkörpers vorgestellt.

Die der Erfindung zugrundeliegenden Probleme des Standes der Technik werden durch einen Ventilkörper gemäß dem Anspruch 1, einen weiteren Ventilkörper gemäß einem nebengeordneten Anspruch sowie durch ein Membranventil gemäß einem weiteren nebengeordneten Anspruch gelöst.

Ein erster Aspekt der Beschreibung betrifft einen Ventilkörper für ein Membranventil, der Ventilkörper umfassend: wenigstens einen Prozessfluid-Kanal, welcher sich entlang einer gedachten ersten Mittenlängsachse erstreckt; wenigstens einen Ventilsitz, welcher über eine mittels einer Ventilmembran verschließbaren Öffnung des Ventilkörpers zugänglich ist; und wenigstens eine zwischen der Öffnung und dem Prozessfluid-Kanal angeordnete Ausnehmung.

Durch die Ausnehmung wird der kV-Wert des Ventilkörpers und des Membranventils insgesamt verbessert. Strömungsabrisse werden reduziert, wobei gleichzeitig die notwendige Festigkeit des Ventilkörpers in Richtung der Öffnung erhalten bleibt. Die Ausnehmung sorgt also für eine Reduktion des Strömungswiderstands.

Vorteilhaft ist diese Lösung insbesondere in einem Anströmbereich, also dem Einlassbereich des Ventils.

Um keine Vorzugsrichtung angeben zu müssen, was den Einbau und den Betrieb vereinfacht, wird in einem Beispiel die Konstruktion spiegelsymmetrisch aufgebaut, also symmetrisch zu einer gedachten Ebene durch den Konturverlauf des Ventilsitzes.

Ein vorteilhaftes Beispiel zeichnet sich dadurch aus, dass der Ventilkörper wenigstens eine Ventilkammer umfasst, welche den wenigstens einen Prozessfluid-Kanal mit dem Ventilsitz fluidführend verbindet, und welche sich entlang einer gedachten zweiten Mittenlängsachse erstreckt, wobei die Ausnehmung sich entlang einer gedachten dritten Mittenlängsachse erstreckt, wobei ein erster stumpfer Winkel, der von der dritten Mittenlängsachse und der ersten und/oder zweiten Mittenlängsachse eingeschlossen wird, größer ist als ein zweiter stumpfer Winkel, der von der ersten und der zweiten Mittenlängsachse eingeschlossen wird.

Ein vorteilhaftes Beispiel zeichnet sich dadurch aus, dass ein zentraler Abschnitt der Ausnehmung und ein zentraler Abschnitt des Ventilsitzes entlang der gedachten ersten Mittenlängsachse beabstandet voneinander angeordnet sind.

Ein vorteilhaftes Beispiel zeichnet sich dadurch aus, dass der zentrale Abschnitt der Ausnehmung in einer gedachten Lotebene der dritten Mittenlängsachse weniger stark gekrümmt ist als eine angrenzende Innenfläche des zugeordneten Prozessfluidkanals in einer gedachten weiteren Lotebene der ersten Mittenlängsachse.

Die verringerte Krümmungsgrad des zentralen Abschnitts der Ausnehmung verbessert das Fließverhalten vom Prozessfluid-Kanal in Richtung Membran und Ventilsitz.

Ein vorteilhaftes Beispiel zeichnet sich dadurch aus, dass der zentrale Abschnitt der Ausnehmung in der gedachten Lotebene der dritten Mittenlängsachse weniger stark gekrümmt ist als der zentrale Abschnitt des Ventilsitzes in einer gedachten weiteren Lotebene der ersten Mittenlängsachse.

Vorteilhaft vergrößert der tiefe Ventilsitz damit die mögliche Durchflussmenge, wohingegen der weniger stark gekrümmte zentrale Abschnitt der Ausnehmung den Strömungsübergang zur Membran verbessert.

Ein vorteilhaftes Beispiel zeichnet sich dadurch aus, dass der zentrale Abschnitt der Ausnehmung lotrecht zur ersten Mittenlängsachse zumindest halb so groß, insbesondere zumindest zwei Drittel so groß ist wie der Durchmesser des zugeordneten Prozessfluid-Kanals.

Vorteilhaft werden so die Durchflusseigenschaften des Ventilkörpers verbessert, da durch den so dimensionierten zentralen Abschnitt ein vergrößerter effektiver Querschnitt in Richtung Ventilsitz bereitgestellt wird.

Ein vorteilhaftes Beispiel zeichnet sich dadurch aus, dass der Ventilsitz eine entlang dessen Kontur verlaufende Sitzfläche umfasst, wobei wenigstens ein Übergangsbereich zwischen der Sitzfläche und einer Innenfläche der Ventilkammern zumindest abschnittsweise eine Facettierung aufweist.

Vorteilhaft wird dadurch der kV-Wert des Ventils weiter verbessert.

Ein vorteilhaftes Beispiel zeichnet sich dadurch aus, dass der Ventilkörper aus einer Metalllegierung gefertigt ist.

Vorteilhaft wird die Facettierung im Bereich des Ventilsitzes und/oder die Ausnehmung durch einen automatisieren Fräsvorgang hergestellt, was die Fertigungsqualität der einzelnen Ventilkörper verbessert, da fertigungsbedingte Unterschiede zwischen einzelnen Exemplaren reduziert werden.

Ein zweiter Aspekt der Beschreibung betrifft einen Ventilkörper für ein Membranventil, der Ventilkörper umfassend: wenigstens zwei Prozessfluid-Anschlüsse; wenigstens zwei Prozessfluid-Kanäle, welche jeweils einen Prozessfluid-Anschluss mit einer zugeordneten Ventilkammer fluidführend verbinden; die zwei Ventilkammern; und einen zwischen den zwei Ventilkammern angeordneten Ventilsitz, welcher über eine mittels einer Ventilmembran verschließbare Öffnung des Ventilkörpers zugänglich ist, wobei der Ventilsitz einer linienförmigen Kontur folgt, die sich von einer Seite der Öffnung zur gegenüberliegenden Seite der Öffnung erstreckt, wobei der Ventilsitz eine entlang der Kontur verlaufende Sitzfläche umfasst, und wobei wenigstens ein Übergangsbereich zwischen der Sitzfläche und einer Fläche einer der Ventilkammern zumindest abschnittsweise eine jeweilige Facettierung aufweist.

Durch die Facettierung des Übergangs zwischen der zentralen Sitzfläche und den Flächen der Ventilkammern ergeben sich verbesserte Strömungseigenschaften bei geöffnetem Ventil, da durch die Facettierung Strömungsabrisse im Fluid reduziert werden.

Ein vorteilhaftes Beispiel zeichnet sich dadurch aus, dass die Facettierung zumindest abschnittsweise eine Mehrzahl von Fasen aufweist.

Vorteilhaft wird durch diese mehrflächige Facettierung eine konvexe Krümmung des Sitzbereichs bereitgestellt, was den kV-Wert, also die Strömungseigenschaften des Ventilkörpers verbessert.

Ein vorteilhaftes Beispiel zeichnet sich dadurch aus, dass in einem Längsschnitt entlang einer Mittenlängsachse eines der Prozessfluid-Kanäle ein stumpfer Winkel zwischen der Sitzfläche und der angrenzenden Fase größer ist als ein stumpfer Winkel zwischen der Fläche der Ventilkammer und der angrenzenden Fase.

Vorteilhaft wird dadurch ein Übergangsbereich geschaffen, der ausgehend von der Sitzfläche zunächst eher flach und dann stärker in Richtung der Ventilkammern abfällt. So kann die Dichtfunktion des Sitzes aufrechterhalten und gleichwohl der kV-Wert verbessert werden.

Ein vorteilhaftes Beispiel zeichnet sich dadurch aus, dass der wenigstens eine Übergangsbereich parallel zur Mittenlängsachse eines des Prozessfluid-Kanäle größer dimensioniert ist als die Sitzfläche.

Vorteilhaft folgt der gesamte Sitzbereich dadurch einer verhältnismäßig großen Krümmung. Dennoch bildet die stegartig verlaufende Sitzfläche ein dichtendes Gegenlager zur Ventilmembran.

Ein vorteilhaftes Beispiel zeichnet sich dadurch aus, dass der Ventilkörper wenigstens eine zwischen der Öffnung und einem der Prozessfluid-Kanäle angeordnete Ausnehmung umfasst, welche sich entlang einer gedachten dritten Mittenlängsachse erstreckt, wobei ein erster stumpfer Winkel, der von der dritten Mittenlängsachse und einer ersten Mittenlängsachse des Prozessfluid-Kanals und/oder der von der dritten Mittenlängsachse und einer zweiten Mittenlängsachse einer Ventilkammer eingeschlossen wird, größer ist als ein zweiter stumpfer Winkel, der von der ersten und der zweiten Mittenlängsachse eingeschlossen wird.

Durch die Ausnehmung wird der kV-Wert des Ventilkörpers zusätzlich verbessert.

Ein vorteilhaftes Beispiel zeichnet sich dadurch aus, dass der Ventilkörper aus einer Metalllegierung gefertigt ist.

Vorteilhaft wird die Facettierung im Bereich des Ventilsitzes und/oder die Ausnehmung durch einen Fräsvorgang hergestellt.

Ein dritter Aspekt der Beschreibung betrifft ein Membranventil umfassend den Ventilkörper gemäß dem ersten oder zweiten Aspekt. Der Ventilkörper umfasst zudem die Ventilmembran, welche die Öffnung des Ventilkörpers verschließt; eine mit der Ventilmembran gekoppelte Antriebsstange; und einen mit Antriebstange zu deren Bewegung entlang einer Stellachse gekoppelten Antrieb.

In der Zeichnung zeigen:
- Fig. 1: einen Ventilkörper für ein Membranventil in einem Längsschnitt;
- Fig. 2: den Ventilkörper in einer perspektivischen Darstellung;
- Fig. 3: einen Ventilsitz des Ventilkörpers in einem Längsschnitt;
- Fig. 4: eine Ausnehmung des Ventilkörpers in einem Längsschnitt;
- Fig. 5: ein Membranventil mit einer beispielhaften Durchströmung.

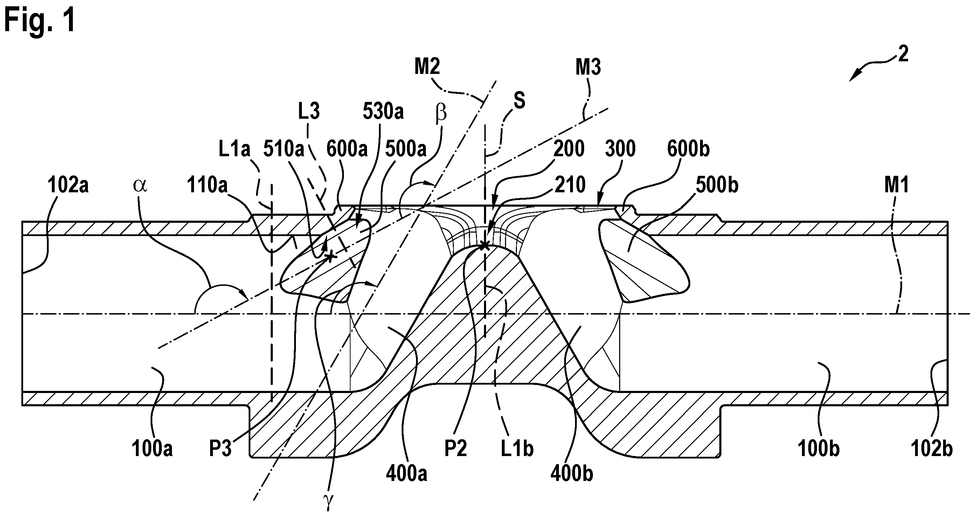

Figur 1 zeigt in einem schematischen Längsschnitt einen Ventilkörper 2 für ein Membranventil. Der Ventilkörper 2 ist aus einer Metalllegierung gefertigt. Der Ventilkörper 2 umfasst zwei Prozessfluid-Kanäle 100a-b, welche sich entlang einer gedachten gemeinsamen ersten Mittenlängsachse M1 erstrecken. Selbstverständlich können in nicht gezeigten Beispielen die Mittenlängsachsen der verschiedenen Prozessfluid-Kanäle auch auseinanderfallen. Insbesondere in Ventilblöcken können die Prozessfluid-Kanäle von der Längsform abweichen und beispielsweise abschnittsweise gebogen ausgeführt sein.

Ein Ventilsitz 200 ist über eine Öffnung 300 im Ventilkörper 2 zugänglich. Die Öffnung 300 ist mittels einer Ventilmembran verschließbar und im Betrieb des Membranventils verschlossen.

Das Membranventil ist geschlossen, wenn die Ventilmembran auf den Ventilsitz 200 gedrückt wird. Das Membranventil ist geöffnet, wenn die Ventilmembran von dem Ventilsitz 200 abgehoben ist.

Eine jeweilige Ventilkammer 400a-b verbindet den zugeordneten Prozessfluid-Kanal 100ab mit dem Ventilsitz 200 fluidführend. Die jeweilige Ventilkammer 400a-b erstreckt sich entlang einer gedachten zweiten Mittenlängsachse M2. Die zwei Prozessfluid-Kanäle 100ab verbinden jeweils einen Prozessfluid-Anschluss 102a-b mit einer zugeordneten Ventilkammer 400a-b fluidführend.

Zwischen der Öffnung 300 und dem jeweiligen Prozessfluid-Kanal 100a-b ist eine Ausnehmung 500a-b angeordnet. Die jeweilige Ausnehmung 500a-b erstreckt sich entlang einer gedachten dritten Mittenlängsachse M3 erstreckt.

Die Ausnehmung 500a-b begrenzt den Innenraum gegenüberliegend zu dem Ventilsitz. Gegenüberliegend meint insbesondere, dass der im Betrieb gemeinsam mit der Ventilmembran begrenzte Innenraum zu der einen Seite abschnittsweise von der Ausnehmung 500a-b und zu einer gegenüberliegenden Seite von dem Ventilsitz 200 begrenzt wird.

Die Ausnehmung 500a-b ist der Ventilkammer 400a-b zugeordnet, also Teil von ihr.

Die Ausnehmung 500a-b definiert einen Strömungsraum, der sich gegenüber dem Ventilsitz 200 befindet, wobei sie den Innenraum des Ventilkörpers 2 in einem Bereich begrenzt, der gemeinsam mit der Ventilmembran 6 im geöffneten Zustand des Membranventils 4 eine Strömungskammer bildet. Die Ausnehmung 500a-b verbindet den zugeordneten Prozessfluid-Kanal 100a-b mit der Ventilkammer 400a-b fluidführend.

In der Figur 1 ist beispielhaft an der Ausnehmung 500a deren Konstruktion beschrieben. In der Beschreibung wird auf die Indizes a und b Bezug genommen, da der Ventilkörper 2 spiegelsymmetrisch zu einer gedachten Ebene durch den Ventilsitz 200 aufgebaut ist. Selbstverständlich sind auch asymmetrische Ausführungen des Ventilkörpers 2 denkbar.

Ein erster stumpfer Winkel a, β, der von der dritten Mittenlängsachse M3 und der ersten und/oder zweiten Mittenlängsachse M1, M2 eingeschlossen wird, ist größer ist als ein zweiter stumpfer Winkel γ, der von der ersten und der zweiten Mittenlängsachse M1, M2 eingeschlossen wird.

Der erste stumpfe Winkel α beträgt im Beispiel 152°, β beträgt 148°. Der zweite stumpfe Winkel γ beträgt 120°.

In einem nicht gezeigten Beispiel beträgt β beispielsweise 160°. Der zweite stumpfe Winkel γ beträgt im nicht gezeigten Beispiel 130°.

Das Verhältnis des stumpfen Winkels γ zu dem stumpfen Winkel β liegt zwischen 0,7 und 0,9, insbesondere zwischen 0,75 und 0,85.

Das Verhältnis des stumpfen Winkels γ zu dem stumpfen Winkel α liegt zwischen 0,7 und 0,9, insbesondere zwischen 0,75 und 0,85.

Die gesamte Ventilkammer 400a-b erstreckt sich also entlang der zweiten Mittenlängsachse M2, wobei die Mittenlängsachse M2 in Bezug auf die Längsachse des Prozessfluid-Kanals M1 steiler verläuft als die Mittenlängsachse M3 der Ausnehmung 500ab.

Zur Stellachse S verläuft die Mittenlängsachse M2 der gesamten Ventilkammer 400a-b flacher als die Mittenlängsachse M3 der Ausnehmung 300a-b.

Der Längsschnitt der Figur 1 zeigt, dass die Ausnehmung 500a-b der Wandung der Ventilkammer 400a-b, die zu dem Ventilsitz 200 hin verläuft, gegenüberliegend angeordnet ist.

Die Stellachse S und die Längsachse M1 spannen eine gemeinsame gedachte Ebene, in Figur 1 die Zeichenebene, auf, in welcher die Mittenlängsachse M2 der Ausnehmung 500ab liegt. Ein zentraler Abschnitt 510a der Ausnehmung 500a und ein zentraler Abschnitt 210 des Ventilsitzes 200 sind entlang der gedachten ersten Mittenlängsachse M1 beabstandet voneinander angeordnet.

Ein auf der Mittenlängsachse M2 liegender gedachter Mittelpunkt P3 des zentralen Abschnitts 510a-b der Ausnehmung 500a-b und ein gedachter Mittelpunkt P2 des zentralen Abschnitts 210 des Ventilsitzes 200 liegen in einer gemeinsamen gedachten Ebene, in welcher die gedachte Mittenlängsachse M1 liegt.

In anderen Worten: Der zentrale Abschnitt 510a der Ausnehmung 500a und der zentrale Abschnitt 210 des Ventilsitzes 200 sind entlang der gedachten ersten Mittenlängsachse M1 nicht verdreht zueinander angeordnet. Vielmehr sind die zentralen Abschnitte 510a und 210 in einer festgelegten Orientierung zueinander ausgerichtet. Insbesondere sind Flächen der zentralen Abschnitte 510a und 210 zumindest abschnittsweise einander zugewandt, was bedeutet, dass die zugehörigen Normalenvektoren, wenn auch in einem Winkel zueinander, in entgegengesetzte Richtungen zeigen.

Der zentrale Abschnitt 510 der Ausnehmung 500a-b ist in einer gedachten Lotebene L3 der dritten Mittenlängsachse M3 weniger stark gekrümmt ist als eine angrenzende Innenfläche 110 des zugeordneten Prozessfluidkanals 100 in einer gedachten weiteren Lotebene L1a der ersten Mittenlängsachse M1.

Der zentrale Abschnitt 510 der Ausnehmung 500a-b ist in der gedachten Lotebene L3 der dritten Mittenlängsachse M3 weniger stark gekrümmt als der zentrale Abschnitt 210 des Ventilsitzes 200 in einer gedachten weiteren Lotebene L1b der ersten Mittenlängsachse M1.

Die Facettierung der Ausnehmung 500a-b verläuft bogenförmig in der Lotebene L3.

In dieser Beschreibung wird unter einer Krümmung einer Linie eine Maßzahl verstanden, mit der die Linie von einer geraden Linie abweicht. Die Krümmung an einem Punkt der Linie ist definiert als der Kehrwert des Krümmungsradius an diesem Punkt. Sie gibt an, wie stark die Linie an diesem Punkt gekrümmt ist.

Eine stärkere Krümmung liegt vor, wenn der Krümmungsradius klein ist, was bedeutet, dass die Linie oder Kontur stark gebogen ist. Im Gegensatz dazu weist eine schwächere Krümmung einen größeren Krümmungsradius auf, was anzeigt, dass die Linie oder Kontur weniger stark gebogen und näher an einer geraden Linie ist.

In der Praxis kann die Krümmung einer Linie oder Kontur durch verschiedene mathematische und geometrische Methoden bestimmt werden, einschließlich der Berechnung des Krümmungsradius oder der Anwendung der Differenzialgeometrie.

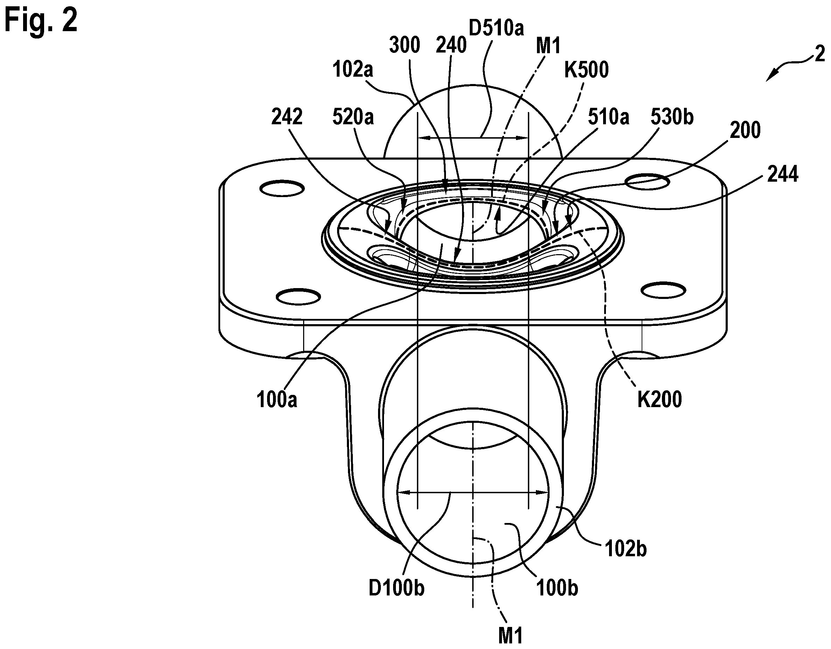

Figur 2 zeigt eine perspektivische Draufsicht auf den Ventilkörper 2, bei der man über die Öffnung 300, die im Betrieb von der Ventilmembran verschlossen ist, in den Prozessfluid-Kanal 100a blickt.

Es ist vorgesehen, dass der zentrale Abschnitt 510a-b der Ausnehmung 500a-b lotrecht zur ersten Mittenlängsachse M1 mit seiner Breite D510a-b zumindest halb so groß, insbesondere zumindest zwei Drittel so groß ist wie der Durchmesser D100a-b des zugeordneten Prozessfluid-Kanals 100a-b.

In der Figur 2 ist aus Übersichtsgründen ein Vergleich der Breite D510a des zentralen Abschnitts 510a gezeigt. Da der gezeigte Ventilkörper 2 jedoch symmetrisch zu einer Ebene durch den Ventilsitz 200 aufgebaut ist, ist dieser dargestellte Vergleich möglich.

Die den zentralen Abschnitt 510a umgebenden lateralen Abschnitte 520a, 530a weisen lotrecht zur dritten Mittenlängsachse M3 eine größere Krümmung auf als die Innenwandung 110a des zugordneten Prozessfluid-Kanals 100a in der Lotebene L1a der ersten Mittenlängsachse M1.

Der zentrale Abschnitt 510a-b ist eine zentrale Fase der Ausnehmung 500a-b. Die lateralen Abschnitte 520a-b und 530a-b sind laterale Fasen des zentralen Abschnitts 510ab, die sich an die zentrale Fase anschließen.

Ein Verhältnis der Breite D510a des zentralen Abschnitts 510a zum Durchmesser D100a-b des zugeordneten Prozessfluid-Kanals 100a-b beträgt zwischen 0,5 und 0,9, insbesondere zwischen 0,6 und 0,8, insbesondere zwischen 0,65 und 0,75.

Die Ausnehmung 500a-b folgt einer Mittenkontur K500, die sich von einer Seite der zugeordneten Kammer 400a-b zur anderen Seite erstreckt. Im Bereich des zentralen Abschnitts 510a-b ist die Ausnehmung 500a-b weniger stark gekrümmt als der zentrale Abschnitt 210 des Ventilsitzes 200.

Der Ventilsitz 200 folgt einer linienförmigen Kontur K200, die sich von einer Seite der Öffnung 300 zur gegenüberliegenden Seite der Öffnung 300 erstreckt. Der Ventilsitz 200 umfasst die entlang der Kontur K200 verlaufende Sitzfläche 202.

Der Verlauf der Sitzfläche 202, also die Kontur K200, und die Stellachse liegen in einer gemeinsamen Ebene.

Ein entlang der Kontur K200 des Ventilsitzes 200 konkav geformter zentraler Abschnitt 240 des Ventilsitzes 200 ist zwischen entlang der Kontur K200 konvex geformten Abschnitten 242, 244 des Ventilsitzes 200 angeordnet.

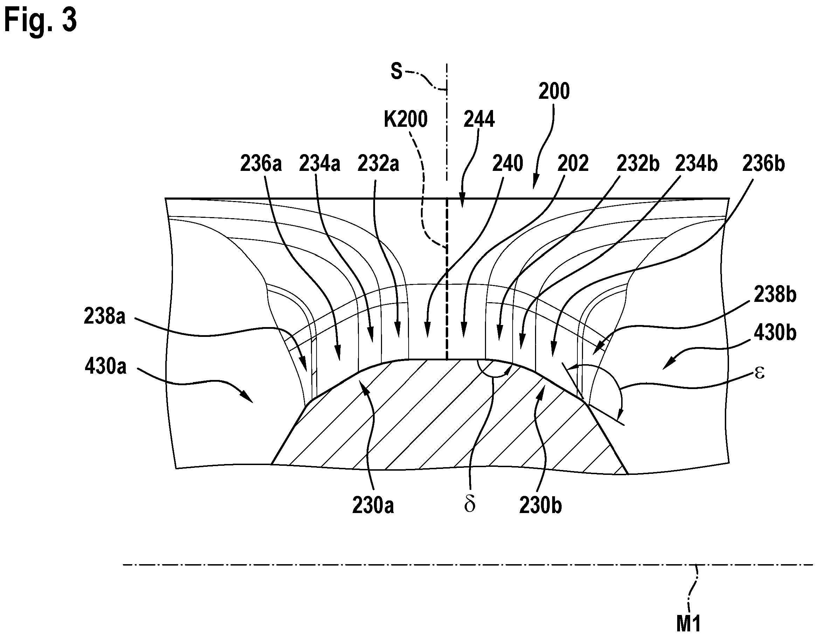

Figur 3 zeigt in einem Ausschnitt aus Figur 1 den Ventilsitz 200. Der Ventilsitz 200 umfasst eine entlang dessen Kontur K200 verlaufende Sitzfläche 202. Die Übergangsbereiche 230a-b zwischen der Sitzfläche 202 und einer jeweiligen Innenfläche 430a-b der Ventilkammern 400a-b weisen zumindest abschnittsweise eine Facettierung auf.

Die Facettierung des jeweiligen Übergangsbereichs 230a-b umfasst zumindest abschnittsweise eine Mehrzahl von Fasen 232a-b, 234a-b, 236a-b, 238a-b.

In einem Längsschnitt entlang einer Mittenlängsachse M1 eines der Prozessfluid-Kanäle 100a-b ist ein stumpfer Winkel δ zwischen der Sitzfläche 202 und der angrenzenden Fase 232a-b größer als ein stumpfer Winkel ε zwischen der Innenfläche 430a-b der Ventilkammer 400 und der angrenzenden Fase 238a-b.

Der jeweilige Übergangsbereich 230a-b ist parallel zur Mittenlängsachse M1 aus Figur 1 eines des Prozessfluid-Kanäle 100a-b größer dimensioniert ist als die Sitzfläche 202.

Die Sitzfläche 202 ist in einem Längsschnitt des Ventilkörpers zwischen zwei facettierten Übergangsbereichen 230a-b angeordnet. Zudem ist die Sitzfläche 200 parallel zur Mittenlängsachse M1 der Prozessfluid-Kanäle 100a-b kleiner dimensioniert als ein jeweiliger der Übergangsbereiche 230a-b parallel zur Mittenlängsachse M1.

Die Facettierung des Ventilsitzes 200 bzw. des Übergangsbereiche 230a-b verläuft bogenförmig in einer gedachten Ebene, in der die Stellachse S und die Mittenlängsachse M1 liegen. Diese gedachte Ebene fällt mit der Zeichenebene der Figur 3 zusammen.

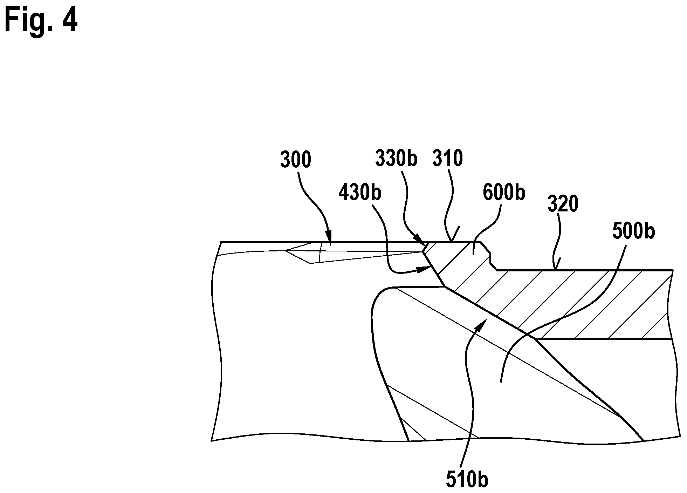

Figur 4 zeigt in einem Längsschnitt analog zu Figur 1 den Bereich der Öffnung 300, der in die Ausnehmung 500b übergeht. Die Öffnung 300 ist von einer Verspannfläche 310 umgeben, welche sich ringförmig um die Öffnung 300 erstreckt und gegenüber einer lateralen Verspannfläche 320 erhaben ist. Die äußere Verspannfläche 320 umgibt die innere Verspannfläche 310. An den Verspannflächen 310 und 320 liegt im Betrieb die Ventilmembran an.

Ein facettierter Übergang 330a-b ist zwischen der Öffnung 300 und der Innenfläche 430b angeordnet. Der facettierte Übergang 330a-b mit mehreren Fasen erstreckt sich abschnittsweise in Umfangsrichtung der Öffnung 300 in einem Bereich, der der Ausnehmung 500a-b zugeordnet ist.

Ein Vorsprung 600a-b, der die Verspannfläche 310 umfasst, erstreckt sich im Längsschnitt des Ventilkörpers 2 ausgehend von einem Hauptkörper des Ventilkörpers 2 in Richtung der Öffnung 300.

Der zentrale Abschnitt 510a-b schließt sich ausgehend von der Öffnung 300 in Richtung des zugeordneten Prozessfluid-Kanals 100a-b an die Innenfläche 430a-b an.

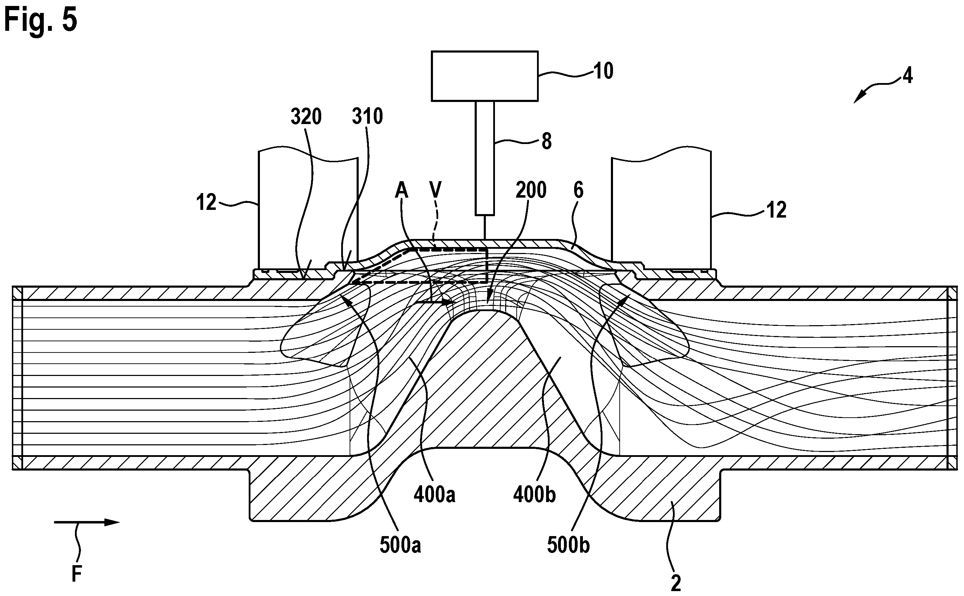

Figur 5 zeigt das Membranventil 4 in einem Längsschnitt analog zur Figur 1, wobei im Unterschied zur Figur 1 die Komponenten des Membranventils 4 schematisch dargestellt sind und zudem die Strömungsverhältnisse des optimierten Ventilkörpers 2 gezeigt sind.

Die Ventilmembran 6 verschließt die Öffnung 300 des Ventilkörpers 2. Eine mit der Ventilmembran 6 gekoppelte Antriebsstange 8 wird mit einem Antrieb 10 bewegt.

Der laterale Abschnitt der Ventilmembran 6 wird mittels eines Spannkörpers 12 auf einen die Öffnung 300 umgebenden Spannabschnitt des Ventilkörpers 2 gemäß den Spannflächen 310 und 320 gedrückt.

Der Antrieb 8, der beispielsweise als Pneumatikantrieb, Magnetantrieb oder Elektroantrieb ausgebildet ist, stützt sich an dem Ventilkörper 2 ab, um die Antriebsstange 8 entlang der Stellachse und damit die Ventilmembran 6 von Ventilsitz 200 abzuheben oder auf den Ventilsitz 200 zu drücken.

In Figur 5 ist schematisch das Strömungsverhalten gezeigt, das mittels des Ventilkörpers 2 erzeugt wird. Das in Flussrichtung F in den Ventilkörper 2 einströmende Prozessfluid kann durch die Ausnehmung 500 einfacher und ohne nennenswerte Strömungsabrisse in den Bereich V eindringen, den die Ventilmembran 6 in geöffnetem Zustand begrenzt.

Der facettierte Ventilsitz 200 verbessert das Strömungsverhalten in einem Anströmbereich A des Ventilsitzes 200, indem scharfe Umlenkungen des Prozessfluids verhindert werden. Gleichwohl wird eine sichere Abdichtung im Bereich des Ventilsitzes 200 garantiert.

## Patentansprüche

1. Ein Ventilkörper (2) für ein Membranventil (4), umfassend:
wenigstens einen Prozessfluid-Kanal (100a-b), welcher sich entlang einer gedachten ersten Mittenlängsachse (M1) erstreckt;
wenigstens einen Ventilsitz (200), welcher über eine mittels einer Ventilmembran (6) verschließbaren Öffnung (300) des Ventilkörpers (2) zugänglich ist; und
wenigstens eine zwischen der Öffnung (300) und dem Prozessfluid-Kanal (100a-b) angeordnete Ausnehmung (500a-b).

2. Der Ventilkörper (2) gemäß dem Anspruch 1, wobei wenigstens eine Ventilkammer (400a-b) den wenigstens einen Prozessfluid-Kanal (100a-b) mit dem Ventilsitz (200) fluidführend verbindet, und wobei die wenigstens eine Ventilkammer (400a-b) sich entlang einer gedachten zweiten Mittenlängsachse (M2) erstreckt, wobei sich die wenigstens eine Ausnehmung (500a-b) entlang einer gedachten dritten Mittenlängsachse (M3) erstreckt, wobei ein erster stumpfer Winkel (α, β), der von der dritten Mittenlängsachse (M3) und der ersten und/oder zweiten Mittenlängsachse (M1, M2) eingeschlossen wird, größer ist als ein zweiter stumpfer Winkel (γ), der von der ersten und der zweiten Mittenlängsachse (M1, M2) eingeschlossen wird.

3. Der Ventilkörper (2) gemäß dem Anspruch 1 oder 2, wobei die wenigstens eine Ausnehmung (500a-b) entlang der Mittenlängsachse (M2) der Ventilkammer (400ab) verläuft, welche in einer durch die erste Mittenlängsachse (M1) und eine Stellachse (S) aufgespannten gedachten Ebene liegt.

4. Der Ventilkörper (2) gemäß einem der vorigen Ansprüche, wobei ein zentraler Abschnitt (510) der Ausnehmung (500) und ein zentraler Abschnitt (210) des Ventilsitzes (200) entlang der gedachten ersten Mittenlängsachse (M1) beabstandet voneinander angeordnet sind.

5. Der Ventilkörper (2) gemäß dem Anspruch 4, wobei der zentrale Abschnitt (510) der Ausnehmung (500) in einer gedachten Lotebene (L3) der dritten Mittenlängsachse (M3) weniger stark gekrümmt ist als eine angrenzende Innenfläche (110) des zugeordneten Prozessfluidkanals (100) in einer gedachten weiteren Lotebene (L1a) der ersten Mittenlängsachse (M1).

6. Der Ventilkörper (2) gemäß Anspruch 4 oder 5, wobei der zentrale Abschnitt (510) der Ausnehmung (500) in der gedachten Lotebene (L3) der dritten Mittenlängsachse (M3) weniger stark gekrümmt ist als der zentrale Abschnitt (210) des Ventilsitzes (200) in einer gedachten weiteren Lotebene (L1b) der ersten Mittenlängsachse (M1).

7. Der Ventilkörper (2) gemäß einem der Ansprüche 4 bis 6, wobei der zentrale Abschnitt (510) der Ausnehmung (500) lotrecht zur ersten Mittenlängsachse (M1) zumindest halb so groß, insbesondere zumindest zwei Drittel so groß wie der Durchmesser (D100a-b) des zugeordneten Prozessfluid-Kanals (100a-b) ist.

8. Der Ventilkörper (2) gemäß einem der vorigen Ansprüche, wobei der Ventilsitz (200) eine entlang dessen Kontur (K200) verlaufende Sitzfläche (202) umfasst, und wobei wenigstens ein Übergangsbereich (230a-b) zwischen der Sitzfläche (202) und einer Innenfläche (430a-b) der Ventilkammern (400a-b) zumindest abschnittsweise eine Facettierung aufweist.

9. Der Ventilkörper (2) gemäß einem der vorigen Ansprüche, wobei der Ventilkörper (2) aus einer Metalllegierung gefertigt ist.

10. Ein Ventilkörper (2) für ein Membranventil (4), umfassend:
wenigstens zwei Prozessfluid-Anschlüsse (102a-b);
wenigstens zwei Prozessfluid-Kanäle (100a-b), welche jeweils einen Prozessfluid-Anschluss (102a-b) mit einer zugeordneten Ventilkammer (400a-b) fluidführend verbinden;
die zwei Ventilkammern (400a-b); und
einen zwischen den zwei Ventilkammern (400a-b) angeordneten Ventilsitz (200), welcher über eine mittels einer Ventilmembran (6) verschließbare Öffnung (300) des Ventilkörpers (2) zugänglich ist, wobei der Ventilsitz (200) einer linienförmigen Kontur (K200) folgt, die sich von einer Seite der Öffnung (300) zur gegenüberliegenden Seite der Öffnung (300) erstreckt, wobei der Ventilsitz (200) eine entlang der Kontur verlaufende Sitzfläche (202) umfasst, und wobei wenigstens ein Übergangsbereich (230a-b) zwischen der Sitzfläche (202) und einer Fläche (430a-b) einer der Ventilkammern (400a-b) zumindest abschnittsweise eine jeweilige Facettierung aufweist.

11. Der Ventilkörper (2) gemäß dem Anspruch 10, wobei die Facettierung, insbesondere in einem jeweiligen Übergangsbereich (230a-b), welcher zwischen einer Sitzfläche (202) und der Fläche der Ventilkammer (400a-b) angeordnet ist, zumindest abschnittsweise eine Mehrzahl von Fasen (232a-b, 234a-b, 236a-b, 238a-b) aufweist.

12. Der Ventilkörper (2) gemäß dem Anspruch 10 oder 11, wobei in einem Längsschnitt entlang einer Mittenlängsachse (M1) eines der Prozessfluid-Kanäle (100a-b) ein stumpfer Winkel (δ) zwischen der Sitzfläche (202) und der angrenzenden Fase (232a-b) größer ist als ein stumpfer Winkel (ε) zwischen der Fläche (430a-b) der Ventilkammer (400) und der angrenzenden Fase (238a-b).

13. Der Ventilkörper (2) gemäß einem der Ansprüche 10 bis 12, wobei der wenigstens eine Übergangsbereich (230a-b) parallel zur Mittenlängsachse (M1) eines des Prozessfluid-Kanäle (100a-b) größer dimensioniert ist als die Sitzfläche (202).

14. Der Ventilkörper (2) gemäß einem der Ansprüche 10 bis 13, wobei der Ventilkörper (2) aus einer Metalllegierung gefertigt ist.

15. Ein Membranventil (4) umfassend:
den Ventilkörper (2) gemäß einem der vorigen Ansprüche;
die Ventilmembran (6), welche die Öffnung (300) des Ventilkörpers (2) verschließt;
eine mit der Ventilmembran (6) gekoppelte Antriebsstange (8); und
einen mit Antriebstange (8) zu deren Bewegung entlang einer Stellachse gekoppelten Antrieb (10).
